# EUROPEAN PATENT APPLICATION

(11) **EP 2 151 349 A1**
(43) Date of publication of application: **10.02.2010**
(21) Application number: 09009990.4
(22) Date of filing: 03.08.2009
(51) Int. Cl.: B60P 3/14, H02K 7/18, H02K 9/04

(54) **Mobile power set**

(30) Priority: 04.08.2008 IT PD20080241
(71) Applicant: DISSERTORI S.A.S, 39044 Egna (BZ) (IT)
(72) Inventor: Dissertori, Martin, 39044 Egna (Bolzano) (IT)
(74) Representative: Pajola, Stefano

(57) **Abstract**

A mobile power unit (1) for use in mobile workshops (O) mounted to vehicles (V) or the like, of the type comprising: an electric generator (2) enclosed in a shielding container (3) and mechanically associated with the power takeoff (P) of an engine (M); cooling means (4) for cooling the generator (2); a distribution panel (5) electrically connected to the electric generator (2) and having power outlets (6) for supplying power to utility devices. The cooling means (4) are located outside the shielding container (3) in a location of the mobile workshop (O) that is protected from water, weather, particulate matter, or the like.

## Description

### Field of invention

The present invention finds application in the field of mobile workshops and relates to the supply of power for operation of working tools, pumps or else.

Particularly, the present invention discloses a power unit designed to be associated with the vehicle and having a power distribution panel.

### Background art

One of the main problems for operators that perform maintenance or any other kind of work in environments or areas without power supply, is the problem of supplying power to equipment, tools or else.

An exemplary case are mobile workshops, i.e. self-propelled or transportable vehicles that are used as workshops in different situations, i.e. in construction sites, in car or enginebike races, and else.

These workshops have a plurality of instruments, equipment and tools which require power for operation. While the electrical system of a vehicle can generally delivery some supplementary power, operation of the instruments and equipment of mobile workshops requires a particularly high power, that an electrical system of a vehicle cannot supply.

In view of obviating this drawback, mobile workshops are equipped with mobile power units.

These generally include one or more engines, generally fuel-powered engines, one or more electric generators moved by said engines, a cooling unit for cooling the engines and the generators, voltage and current regulators, electronics for control and stabilization of the voltage and current generated and one or more power distribution panels.

While this solution serves the intended functions, it is particularly bulky for the narrow spaces of mobile workshops. Furthermore, the above power units have a considerable weight and are hence difficult to handle and place within the workshop.

Also, they cannot be located anywhere in the vehicle, but only in areas protected from water, weather, particulate matter and in general from anything that can damage their operation. This is because these power units have an open body to allow cooling and fuel supply.

Thus, patent CN 1 094 198 discloses a power unit that has no engine. Therefore, the generator is operated by connecting it to the engine of the vehicle via mechanical transmission means. It can be thus understood that the power unit is more compact and certainly lighter than those mentioned above.

Nevertheless, this solution suffers from the drawback of requiring the power unit to be located in a protected area, to preserve it from contact with water or with any agent that might damage it.

### Disclosure of the invention

A general object of the present invention is to overcome the above drawbacks, by providing a light and compact mobile power unit.

A particular object within the above mentioned general object is to provide a mobile power unit that can be easily associated with a mobile workshop.

Another particular object of the invention within the general object is to provide a power unit that will not be damaged by exposure to water, weather, particulate matter or else, and can be placed anywhere in the mobile workshop.

These and other objects, as better explained hereafter, are fulfilled by a mobile power unit as defined in the main claim.

Particularly, the mobile power unit, of the type for use with mobile workshops mounted to vehicles or the like, comprises:
- at least one electric generator enclosed in a shielding container and mechanically associated with the power takeoff of a engine;
- cooling means for cooling said generator;
- at least one distribution panel electrically connected to said electric generator and having electrical plugs for supplying power to utility devices,
   and is characterized in that said cooling means are located outside said shielding container in a location of said mobile workshop that is protected from water and weather.

It will be thus appreciated that an important aspect of the power unit as disclosed herein consists in that the cooling means are separate from the body that contains the generator and the control and stabilization electronics.

This allows the power unit both to have reduced bulk and weight, as better explained below, and to be immune to water, weather, particulate matter and else. Due to the absence of the cooling means, a hermetically sealed container may be hence used as a shielding container.

Suitably, connection between the above external cooling means and the generator they are designed to cool is provided by at least one pipe that communicates with the interior of the shielding container by the interposition of first sealing means.

As a result, the power unit may be located anywhere in the mobile workshop without affecting its integrity. Particularly, for improved space management, it may be located below the workshop floor. The tightness of the shielding container allows it to be anyway protected against extraordinary events such as dipping in water due, for instance, to the passage of the mobile workshop through a flooded tunnel. This situation is not unlikely to occur, because such mobile workshops are also used, for instance, in cases of natural disasters and the power unit may be used to supply power to dewatering pumps.

It will be appreciated that the power unit maintains the advantage of not including a engine, the generator being designed to be connected to an external engine. Particularly, in one aspect of the invention, the electric generator is associated with the power takeoff of a engine, typically the engine of the vehicle that forms the mechanical workshop or with which the mechanical workshop is coupled, via a mechanical transmission comprising at least one shaft that passes through the shielding container at a through hole.

The latter obviously has second sealing means to ensure tightness of the shielding container.

In one aspect of the invention, the shaft passes through the shielding container and its free end, external to the container, has a flange for connection to further mechanical apparatus for powering thereof. Thus, for instance, multiple power units may be provided, which are mechanically connected in series and may be powered by a single engine.

### Brief description of the drawings

Further features and advantages of the invention will be more apparent from the detailed description of a few preferred, non-exclusive embodiments of the power unit of the invention, which are described by way of non-limiting examples with the help of the annexed drawings, in which:
FIG. 1 shows a mobile workshop having the power unit of the invention;
FIG. 2 shows a detail of the power unit of the invention;
FIG. 3 is an exploded view of the detail of Fig. 2.

### Detailed description of a preferred embodiment

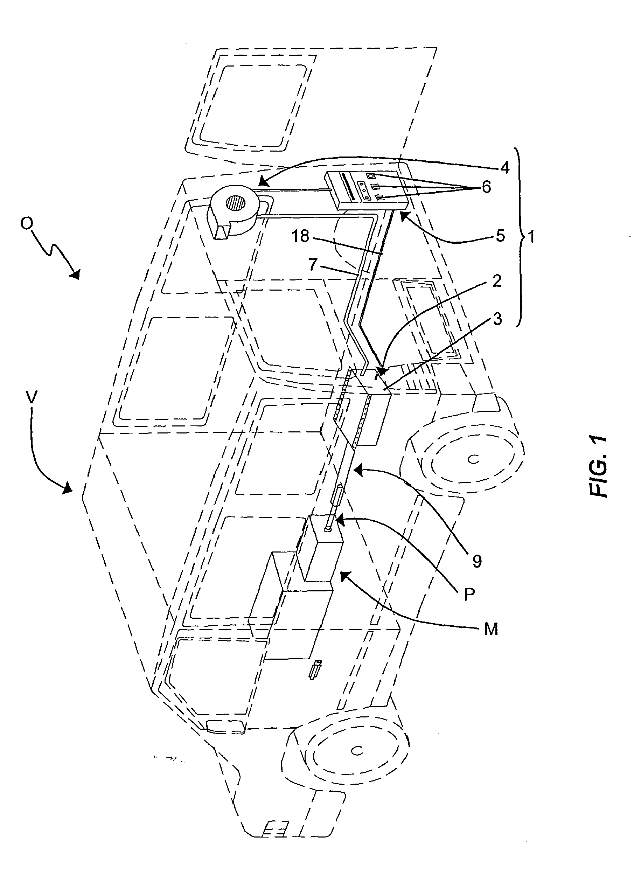

Referring to Fig. 1, there is shown a mobile power unit 1 for use with mobile workshops O mounted to vehicles V or the like.

The power unit 1 first comprises at least one electric generator 2 enclosed in a shielding container 3 and mechanically associated with the power takeoff P of a engine M.

The shielding container 3 also contains the rectifiers 3, the current and voltage stabilizers and, in general, all control electronics required for the supply of electric current and voltage to external apparatus.

Concerning the engine M, the latter is generally the engine of the vehicle V with the mobile workshop O mounted thereto. This obviously does not prevent the use, in different embodiments, of a different engine, with which the mobile workshop may be equipped, possibly for other purposes.

The power unit 1 also comprises cooling means 4 for cooling the generator 2 and at least one distribution panel 5 electrically connected to the electric generator 1 and having electrical plugs 6 for supplying power to utility devices.

According to the invention, the cooling means 4 are located outside the shielding container 3 in a location of the mobile workshop O that is protected from water, weather, particulate matter, or else.

As anticipated above, one important aspect of the power unit 1 as disclosed therein is the location of the cooling means 4 separate from the shielding container 3. This reduces the bulk of the latter, as well as the weight it has with all of its contents. This will enhance portability and simplify placement thereof in the mobile workshop.

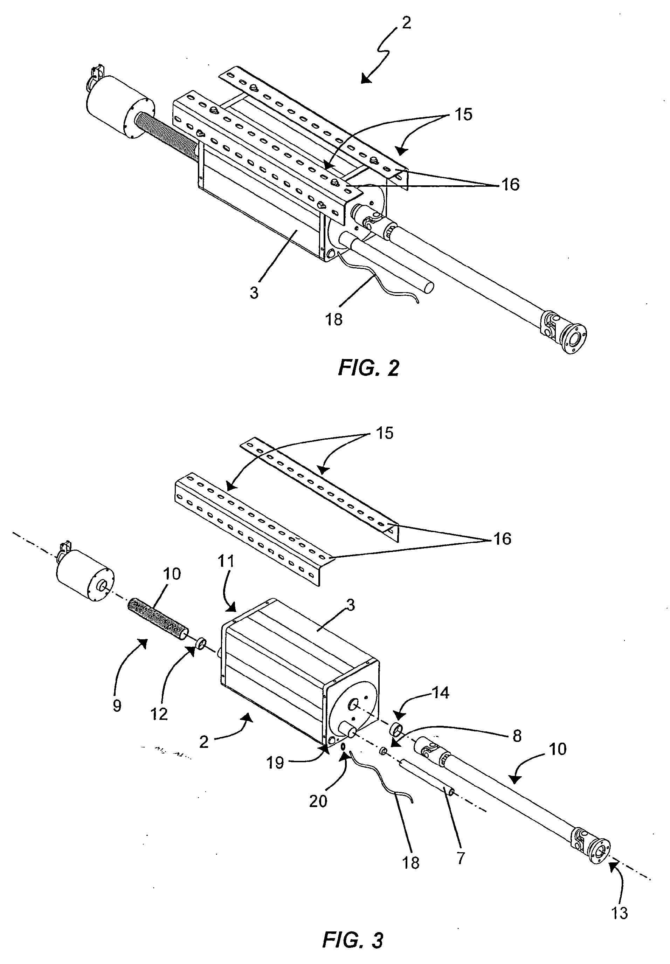

In one aspect of the invention, the shielding container 3, which is also shown in the detail of Fig. 2, is a hermetically sealed container. This will make the power unit 1 and particularly its generator 2 with the electronics associated therewith, immune from water, weather, particulate matter, and else. The use of a hermetically sealed container is allowed by the absence of cooling means 4 therein.

In short, what is suggested is to remove a bulky and heavy element, requiring direct connection with the outside environment, i.e. the cooling means 4, from the interior of the shielding container 3.

This allows the shielding container 3 with the generator 2 to be located outside the mobile workshop O. If the latter is a vehicle V, a particularly convenient position thereof is below the floor of the vehicle V. The tightness of the container protects the integrity of the generator 2, even when the floor of the vehicle is dipped in water. This may occur, as mentioned above, when operating in a flooded tunnel.

In any case, the shielding container has coupling means 15 for removable fixation to the mobile workshop O. These means generally consist of metal brackets 16 with a plurality of screw receiving holes for attachment to the mobile workshop O. In certain variant embodiments, the coupling means may consist of mutually associable slides and rails that can be locked in position by stop means, generally of the screw type.

A further consequence of the dislocation of the cooling means is free design of the generator 2, with geometrical shapes that might allow the shielding container 3 to be more easily accommodated in the mobile workshop O. Namely, two elements were removed, i.e. the engine M and the cooling means 4, which compelled designers to impart a predetermined shape to the shielding container 3, and prevented any attempt to reduce its size by redesigning the generator 2.

Conveniently, the cooling means 4 are disposed in a protected location of the mobile workshop O and are operably connected to the generator 2 via at least one pipe 7 in communication with the interior of the shielding container 3. As shown in Fig. 3, first sealing means 8 are interposed between such conduit 7 and the shielding container 3, to maintain the tightness of the container.

In another aspect of the container, the cooling means 4 are generally of the forced suction type, with air filters to also ensure protection from particulate matter or else. While this is particularly convenient, different cooling means may be also used, in different embodiments.

Mechanical connection between the electric generator 2 and the engine M is provided by a mechanical transmission 9 that connects the generator to the power takeoff P of the engine M. This mechanical transmission 9 comprises at least one shaft 10 that passes through at least one wall 11 of the shielding container 3, at a through hole. The latter has second sealing means 12 to ensure tightness of the shielding container.

In a further aspect of the invention, the shaft 10 passes through the shielding container 3 and its free end, external to the shielding container 3, has a flange 13 for connection and powering of further mechanical apparatus. As anticipated above, this allows easy connection of multiple power units or multiple mechanical devices to the same engine M. Third sealing means 14 are obviously provided at the exit of the shaft 10 from the shielding container 3.

Another important aspect of the invention is the electrical connection between the distribution panel 5 and the electric generator 2. Such connection generally occurs by means of an electrical cable 18 that passes through the shielding container 3 at a second through hole 19 having fourth sealing means 20. The panel 5 will be obviously disposed in such position as to ensure protection from water, weather or else, as well as comfortable access.

Concerning the sealing means 8, 12, 14, 20, these generally consists of seals and/or adhesives. In certain variant embodiments, tubular connection conduits may be provided at the access holes of the electric cable and/or the pipe for connection to the ventilation means, which conduits are sealed to the shielding container, and have pipes connected therewith for protection of the electric cable and the pipe for connection to the ventilation means. Sealing means are obviously interposed between such conduits and pipes, which generally consist of seals and/or sealing rings.

In view of the above, it will be appreciated that the mobile power unit of the invention fulfils the intended objects and has a generator section with a particularly light weight and compact size.

More particularly, the mobile power unit as disclosed herein can be easily associated with a mobile workshop and will not be damaged by exposure to water, weather, particulate matter or else, which allows it to be placed anywhere either inside or outside the mobile workshop.

The mobile power unit of this invention is of course susceptible to a number of changes and variants, within the inventive concept disclosed in the appended claims. All the details thereof may be replaced by other technically equivalent parts, and the materials may vary depending on different needs, without departure from the scope of the invention.

While the mobile power unit has been described with particular reference to the accompanying figures, the numerals referred to in the disclosure and claims are only used for the sake of a better intelligibility of the invention and shall not be intended to limit the claimed scope in any manner.

## Claims

1. Mobile power unit for use in mobile workshops (O) mounted on vehicles (V) or the like, comprising:
- at least one electric generator (2) enclosed by a shielding container (3) and mechanically associated to the power takeoff (P) of a motor (M);
- cooling means (4) for cooling said generator (2);
- at least one distribution panel (5) electrically connected to said electric generator (2) and having electrical plugs (6) for the supply of utility devices,
**characterized in that** said cooling means (4) are located externally of said shielding container (3) in a location that is protected from water, atmospheric agents, powders or the like.

2. Mobile power unit as claimed in claim 1, **characterized in that** said protection container (3) comprises a watertight container.

3. Mobile power unit as claimed in claim 2, **characterized in that** said cooling means (4) are operatively connected with said electric generator (2) by at least a pipe (7) connected inside said protection container (3) with the interposition of first sealing means (8).

4. Mobile power unit as claimed in any of the preceding claims, **characterized in that** said cooling means (4) are of the type to forced suction.

5. Mobile power unit as claimed in any of the claims from 2 to 4, **characterized in that** said electric generator (2) is associated to said power takeoff (P) by a mechanic transmission (M) comprising at least one shaft (10) crossing at least one wall (11) of said shielding container (3) at a corresponding first through hole.

6. Mobile power unit as claimed in claim 5, **characterized in that** said hole has second sealing means (12) to provide a watertight sealing of said shielding container (3) with said shaft (10).

7. Mobile power unit as claimed in claim 6, **characterized in that** said shaft (10) is passing through said protection shielding (3), the free end of said shaft (10) external to said protection shielding (3) having a flange (13) for connection to further mechanical apparatuses for powering thereof.

8. Mobile power unit as claimed in any of the claims from 2 to 7, **characterized in that** said distribution panel (5) is electrically connected to said generator (2) by at least one electrical cable (18) crossing said shielding container (3) at a second through hole (19) having fourth sealing means (20).

9. Mobile power unit as claimed in any of the preceding claims, **characterized in that** said shielding container (3) comprises hook means (15) for the removable coupling thereof to the mobile workshop (O).

10. Mobile power unit as claimed in any of the preceding claims, **characterized in that** said motor (M) for driving said generator (2) is the main engine of the vehicle (V) on which said mobile workshop (O) is mounted.
